# EUROPEAN PATENT APPLICATION

(11) **EP 2 949 862 A1**
(43) Date of publication of application: **02.12.2015**
(21) Application number: 13872429.9
(22) Date of filing: 21.03.2013
(51) Int. Cl.: F01B 29/10, F03G 7/00, F01C 13/00, F01K 25/10

(54) **PNEUMATIC ENERGY MACHINE**

(30) Priority: 28.01.2013 CN 201310032599
(71) Applicant: Feng, Xiufu, Changling, Jilin 131500 (CN)
(72) Inventor: Feng, Xiufu, Changling, Jilin 131500 (CN)
(74) Representative: Ipside
(86) International application number: PCT/CN2013/072994
(87) International publication number: WO 2014/114030

(57) **Abstract**

A pneumatic energy machine comprises a pressure supply system, a power output system, a reset system, and a control system. In the pneumatic energy machine, pressure differences are formed between a first gas storage device, a second gas storage device, a third gas storage device, and atmospheric pressure, and a piston and other assemblies are driven to move through the pressure differences, so that the conversion from pressure energy to kinetic energy is carried out, and energy is continuously output to the outside. The pneumatic energy machine does not use fuel to output energy to the outside, and therefore, has the advantages of being green and environment-friendly. Meanwhile, through the special structural design of the pneumatic energy machine, the pressure in the first gas storage device can be continuously converted into power to be output to the outside, and no heat is released to the outside; therefore, energy loss is greatly reduced, and the energy conversion efficiency is improved.

## Description

This application claims the benefit of priority to Chinese Patent Application No. 201310032599.2 titled "PNEUMATIC MOTOR", filed with the Chinese State Intellectual Property Office on January 28, 2013, the entire disclosure of which is incorporated herein by reference.

### TECHNICAL FIELD

The present application relates to the technical field of power plant, and particularly to a pneumatic motor.

### BACKGROUND

At present, an engine is the most well-known device in energy conversion devices, and has the widest application scope, while some other energy conversion devices such as batteries also have a crucial effect on people's life and work.

The engine is a device designed to convert chemical energy generated during the reaction of a fuel into kinetic energy for a mechanical component, and the engine includes a gasoline engine and a diesel engine according to the type of fuels. An operating process of the gasoline engine is briefly introduced hereinafter.

In the conventional technology, a typical gasoline engine includes a cylinder, a combustion chamber, a piston and a connecting rod. The piston is hermetically arranged inside the cylinder and is slidably and hermetically coupled to the cylinder. The cylinder is in communication with the combustion chamber, and the piston is connected to the connecting rod. When gasoline is ejected into the combustion chamber in the form of vapor and is mixed with air, detonation occurs under the action of a spark plug, and great heat energy and expansion potential energy are generated instantaneously. The expansion potential energy drives the connecting rod of the gasoline engine to move via the piston, to convert the expansion potential energy into the kinetic energy of the gasoline engine. Since the gasoline engine can only use the potential energy generated during the detonation, the heat energy generated during the detonation is dissipated through the heat exchange with the air, which causes a waste of resources.

In the above energy conversion process, since the gasoline vapor is burned inside the combustion chamber, fresh air inside the combustion chamber is limited by the space, thus cannot provide enough oxygen for burning of the gasoline vapor. Thus, the incomplete burning also causes a waste of energy.

In addition, with the environmental pollution and the resource shortage becoming increasingly serious, developing a green energy has become a mainstream direction of energy development for the current society. Tail gas discharged by the gasoline engine or the diesel engine is one of the main pollutants in air pollution.

Therefore, an issue to be urgently addressed by those skilled in the field is to provide a green power plant with a high energy conversion rate.

### SUMMARY

A technical issue to be addressed by the present application is to provide a pneumatic motor, which can convert gas pressure into power to output energy, and has a high energy conversion efficiency and is pollution-free.

For addressing the above technical issue, a pneumatic motor is provided in the present application, which includes a pressure supply system, a power output system, a reset system, and a control system. The pressure supply system includes a first gas storage device, a piston cylinder sleeve is provided inside the gas storage device, a high-pressure piston is movably arranged inside the piston cylinder sleeve, the high-pressure piston is in airtight contact with an inner wall of the piston cylinder sleeve, a first driving rod extending out of the first gas storage device is provided on the high-pressure piston, the piston cylinder sleeve is further provided with a piston connecting component, the piston connecting component has one end inserted into the piston cylinder sleeve and being movable inside the piston cylinder sleeve, an end portion of this end of the piston connecting component is configured to abut against the high-pressure piston, the piston connecting component has another end on which a locking and pressing connection cylinder is slidably arranged, and the locking and pressing connection cylinder is hermetically connected to the piston connecting component and is in communication with atmosphere, and a second driving rod extending out of the first gas storage device is provided on the locking and pressing connection cylinder. The power output system includes a reversible driving wheel and a driving rack configured to mesh with the reversible driving wheel, the driving rack is arranged on the first driving rod, and a transmission shaft is arranged on the first gas storage device and is rotatable unidirectionally. The reset system includes a second gas storage device and a third gas storage device, the second gas storage device is provided with a first low-pressure sleeve, a first low-pressure piston is provided inside the first low-pressure sleeve, and the first low-pressure piston is connected to the first driving rod, a second low-pressure piston is provided inside a second low-pressure sleeve, and the second low-pressure piston is connected to the second driving rod. The control system includes an intelligent control single chip computer; a lever hinged to the first gas storage device, which has one end connected to the first driving rod, and another end hinged to a regulating rod, the regulating rod being provided with a push rod configured to abut against the locking and pressing connection cylinder and push the locking and pressing connection cylinder to move towards the third gas storage device; a locking mechanism, which is arranged on the locking and pressing connection cylinder and configured to lock the piston connecting component to fix the piston connecting component with respect to the locking device; and an inlet valve and an outlet valve, which are both arranged on the piston cylinder sleeve, and are configured to be controlled by the intelligent control single chip computer to be opened or closed.

Preferably, the driving rack and the first driving rod are formed integrally.

Preferably, an air supplement system is further provided in the present application, wherein the air supplement system includes a fourth gas storage device, and the fourth gas storage device is in communication with the first gas storage device.

Preferably, a detection component is further provided in the present application and is configured to detect a pressure inside the first gas storage device and connected to the first gas storage device.

The pneumatic motor is provided in the present application, and with the above structural design, pressure differences are formed between the first gas storage device, the second gas storage device, the third gas storage device and the atmosphere, the piston and other components are driven to move by the pressure differences, thereby converting the pressure energy into kinetic energy and continuously outputting energy. Compared with the conventional power plant, the pneumatic motor according to the present application doesn't employ fuel oil to output energy, thus the pneumatic motor according to the present application is green and environmental friendly. Meanwhile, with a special structure design, the pressure in the first gas storage device can be continuously converted into a driving force to be outputted, and if energy loss generated by the friction between components is not considered, the pneumatic motor according to the present application may not dissipate heat outwards, thereby greatly reducing the heat loss, and improving the energy conversion efficiency of the pneumatic motor according to the present application.

### BRIEF DESCRIPTION OF THE DRAWINGS

Figure 1 is a schematic view showing the structure of a pressure supply system according to an embodiment of the present application; and
Figure 2 is a schematic view showing the structure of a pneumatic motor according to an embodiment of the present application.

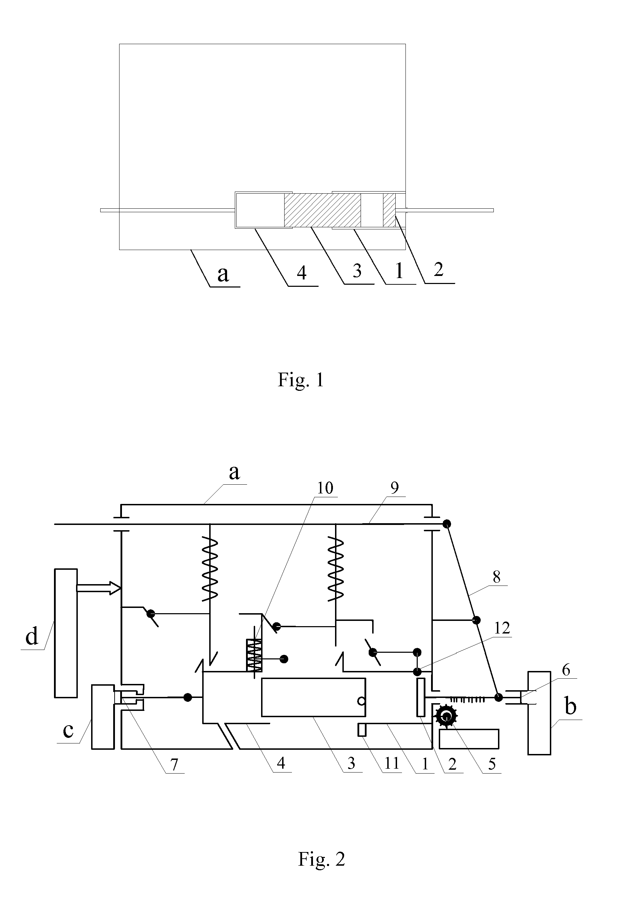

Corresponding relationships between reference numerals and components in Figures 1 to 2 are as follows:

| | | | |
|---|---|---|---|
| 1 | piston cylinder sleeve, | 2 | high-pressure piston, |
| 3 | piston-connecting component, | 4 | locking and pressing connection cylinder, |
| 5 | reversible driving wheel, | 6 | first low-pressure piston, |
| 7 | second low-pressure piston, | 8 | lever, |
| 9 | regulating rod, | 10 | locking device, |
| 11 | inlet valve, | 12 | outlet valve, |
| a | first gas storage device, | b | second gas storage device, |
| c | third gas storage device, and | d | fourth gas storage device. |

### DETAILED DESCRIPTION

The technical solutions in the embodiments of the present application will be described clearly and completely hereinafter in conjunction with the drawings in the embodiments of the present application. Apparently, the described embodiments are only a part of the embodiments of the present application, rather than all embodiments. Based on the embodiments in the present application, all of other embodiments, made by the person skilled in the art without any creative efforts, fall into the scope of the present application.

Embodiments of the present application are described in detail in conjunction with drawings.

Reference is made to Figures 1 and 2, Figure 1 is a schematic view showing the structure of a pressure supply system according to an embodiment of the present application, and Figure 2 is a schematic view showing the structure of a pneumatic motor according to an embodiment of the present application.

A pneumatic motor is provided according to the present application, which includes a pressure supply system, a power output system, a reset system, and a control system.

The pressure supply system includes a first gas storage device a. A piston cylinder sleeve 1 is provided inside the first gas storage device a, and a high-pressure piston 2 is movably arranged inside the piston cylinder sleeve 1 and is in airtight contact with an inner wall of the piston cylinder sleeve 1. A first driving rod is provided on the high-pressure piston 2 and extends out of the first gas storage device a. The piston cylinder sleeve 1 is provided with a piston connecting component 3. The piston connecting component 3 has one end extending into the piston cylinder sleeve 1 and being movable inside the piston cylinder sleeve 1, an end portion of this end of the piston connecting component 3 is configured to abut against the high-pressure piston 2, and the piston connecting component 3 has another end on which a locking and pressing connection cylinder 4 is slidably arranged, and the locking and pressing connection cylinder 4 is connected to the piston connecting component 3 in an airtight manner and is in communication with atmosphere. A second driving rod is provided on the locking and pressing connection cylinder 4 and extends out of the first gas storage device a.

The power output system includes a reversible driving wheel 5 and a driving rack configured to mesh with the reversible driving wheel 5. The driving rack is arranged on the first driving rod, and a transmission shaft is arranged on the first gas storage device a and can only rotate unidirectionally.

The reset system includes a second gas storage device b and a third gas storage device c. The second gas storage device b is provided with a first low-pressure sleeve, a first low-pressure piston 6 is provided inside the first low-pressure sleeve, and is connected to the first driving rod. A second low-pressure piston 7 is provided inside a second low-pressure sleeve, and is connected to the second driving rod.

The control system includes an intelligent control single chip computer, a lever 8 hinged to the first gas storage device a, a locking mechanism 10, and an inlet valve 11 and an outlet valve 12. The lever 8 has one end connected to the first driving rod, and another end hinged to a regulating rod 9. The regulating rod 9 is provided with a push rod which is configured to abut against the locking and pressing connection cylinder 4 and push the locking and pressing connection cylinder 4 to move toward the third gas storage device c. The locking mechanism 10 is arranged on the locking and pressing connection cylinder 4 and is configured to lock the piston connecting component 3 to fix the piston connecting component 3 with respect to the locking device 10. The inlet valve 11 and the outlet valve 12 are both arranged on the piston cylinder sleeve 1, and are controlled by the intelligent control single chip computer to be opened or closed.

The control system employs the single chip computer, which has a logical function and operation function. Control programs are stored in the single chip computer, and are used to perform opening or closing operation on components having control functions according to the operating conditions of the pneumatic motor according to the present application. Since the single chip computer has been fully used in the industrial field, thus will not be described in detail herein.

Based on the above structural design, the specific operating process of the present application is described as follows.

The pressure system provides pressure energy for the operation of this device, and includes one gas storage device, that is the first gas storage device a. A large amount of gas is stored in the first gas storage device a, and the gas is preferably embodied as inert gas, which can have a stable performance during the operation process.

Specifically, the pressure in the first gas storage device a may be eight times standard atmospheric pressure.

Of course, considering the cost, the gas stored in the first gas storage device a is purified gas in the present application. The piston cylinder sleeve 1 is arranged inside the first gas storage device a, and the high-pressure piston 2 is arranged inside the piston cylinder sleeve 1. The high-pressure piston 2 is provided with the first driving rod and the first driving rod extends out of the first gas storage device a, and for ensuring that the high-pressure piston 2 is movable, the first gas storage device a is provided with a hole for the first driving rod to extend out, and the hole is in communication with the piston cylinder sleeve 1. The piston cylinder sleeve is in airtight contact with the high-pressure piston 2, thus two end surfaces of the high-pressure piston 2 are subjected to different pressures when the high-pressure piston 2 is arranged inside the piston cylinder sleeve 1, one end surface is subjected to eight times standard atmospheric pressure applied by the first gas storage device a, and another end surface is subjected to the standard atmospheric pressure. Since two sides of the piston are subjected to different pressures, the high-pressure piston 2 can move outwards (the outward direction herein is defined with respect to an interior of the first gas storage device a) under the action of the first gas storage device a.

One end of the piston connecting component 3 is inserted into the piston cylinder sleeve 1, and another end thereof is arranged with the locking and pressing connection cylinder 4, thereby forming a structure that the piston connecting component 3 is movable with respect to the piston cylinder sleeve 1 and the locking and pressing connection cylinder is movable with respect to the piston connecting component 3. Two ends of the piston connecting component 3 are respectively arranged inside the piston cylinder sleeve 1 and the locking and pressing connection cylinder 4, the pressure in the piston cylinder sleeve 1 is the same as the pressure in the first gas storage device a, and the locking and pressing connection cylinder 4 is in communication with the atmosphere, therefore the pressure in the locking and pressing connection cylinder 4 is the atmospheric pressure, and a pressure difference is generated at two ends of the piston connecting component 3, which allows the piston connecting component 3 to be movable.

The power output system includes the reversible driving wheel 5 and the driving rack configured to mesh with the reversible driving wheel 5. The driving rack is arranged on the first driving rod, and the transmission shaft is arranged on the first gas storage device a and can rotate unidirectionally.

The first driving shaft is driven by the high-pressure piston 2 to move, and meanwhile drives the reversible driving wheel 5 to rotate via the driving rack. The reversible driving wheel 5 can apply a rotation acting force on the transmission shaft in one rotation direction and enable the transmission shaft to idle in another direction. When the reversible driving wheel 5 drives the transmission shaft to move, the transmission shaft outputs the kinetic energy via an external device. In the case that the high-pressure piston 2 pushes the first driving rod to a preset position, the first driving rod is pushed back under the action of the pressure of the second gas storage device b, and in this case, the first driving rod may drive the high-pressure piston 2, which is in a state that pressures at two sides thereof are equal, to reset to an initial state, and perform a next motion under the action of the pressure of the gas storage device.

With the above structure, the piston is allowed to move outwards with respect to the first gas storage device, and for ensuring the continuous operation of this device, the reset system is further provided in the present application.

The reset system includes the second gas storage device b and the third gas storage device c. The second gas storage device b is provided with the first low-pressure sleeve, and the first low-pressure piston 6 is provided inside the first low-pressure sleeve and is connected to the first driving rod. The second low-pressure piston 7 is provided inside the second low-pressure sleeve, and is connected to the second driving rod.

Firstly it should be noted that, the piston cylinder sleeve 1 is provided with the inlet valve 11 and the outlet valve 12, and to ensure that the gas in the first gas storage device a can enter into the piston cylinder sleeve 1, the inlet valve 11 is kept open during the process of the piston moving outwards, which makes the gas pressure of the piston cylinder sleeve 1 to be balanced with the gas pressure of the first gas storage device a, namely, the gas pressure of the piston cylinder sleeve 1 is also eight times standard atmospheric pressure, to drive the high-pressure piston 2 to move. After the high-pressure piston 2 moves outwards to reach a limit position, the inlet valve 11 is closed and the outlet valve 12 is opened, and this operating condition is maintained.

In the operating process of the pneumatic motor according to the present application, heat may be generated by the friction between components (according to experimental statistics of the inventor, the heat generally has a temperature ranged from 40 degrees centigrade to 60 degrees centigrade). When the first gas storage device is heated (the high-pressure piston 2 is arranged inside the piston cylinder sleeve 1, and the friction heat generated between the high-pressure piston 2 and the piston cylinder sleeve 1 is a main heat resource), the temperature of gas in the first gas storage device a is increased, which further increase the pressure in the first gas storage device a. Therefore, in the present application, although energy may exist in the form of heat energy, the heat energy still functions inside the pneumatic motor and may be not dissipated, which further improves the energy conversion efficiency of the pneumatic motor. This is also a main difference between the present application and the conventional technology.

When the high-pressure piston 2 moves outwards to the limit position, the piston connecting component 3 moves outwards to a limit position at the same time, and in this state, the locking device 10 is opened to form a rigid connection between the piston connecting component 3 and the locking and pressing connection cylinder. In this way, gas pressures at two ends of an assembly formed by combining the locking device 10 and the piston connecting component 3 are the same, that is both are eight times standard atmospheric pressure, which makes the pressure difference between the two ends of the assembly to be zero and keep balance at the two ends of the assembly. The second driving rod is connected to the locking and pressing connection cylinder, and the second low-pressure piston 7 is connected to the second driving rod, thus under the action of the pressure of the third gas storage device c, the locking and pressing connection cylinder can drive the assembly formed by combining the locking device 10 and the piston connecting component 3 to move toward the high-pressure piston 2, to allow the piston connecting component 3 to abut against the high-pressure piston 2. (According to the above description, when the outlet valve 12 is opened, the gas inside the piston cylinder sleeve 1 is discharged via the outlet valve 12 in the process of the piston connecting component 3 moving toward the high-pressure piston 2 before the piston connecting component 3 abutting against the high-pressure piston 2.)

When the piston connecting component 3 abuts against the high-pressure piston 2, the locking device 10 is opened to allow the piston connecting component 3 and the locking and pressing connection cylinder to return to the connection structure that the piston connecting component 3 and the locking and pressing connection cylinder are slidably connected. Since the locking and pressing connection cylinder is in communication with the atmosphere, the assembly formed by the piston connecting component 3 abutting against the high-pressure piston 2 is reset under the action of the pressure of the second gas storage device b, then enters a next operating period.

In an embodiment of the present application, the gas pressure in the first gas storage device a is eight times standard atmospheric pressure, the gas pressure in each of the second gas storage device b and the third gas storage device c is two times standard atmospheric pressure, and the gas pressure in the locking and pressing connection cylinder in communication with the atmosphere is one standard atmospheric pressure.

The driving rack may be formed integrally with the first driving rod.

A pressure supplement system may be further provided in the present application, and includes a fourth gas storage device d in communication with the first gas storage device a.

A detection component configured to detect the gas pressure inside the first gas storage device a may be provided in the present application, and the detection component is connected to the first gas storage device a.

In embodiments of the present application, one operating period of the high-pressure piston 2 includes four steps.

In a first step, high-pressure gas (having eight times standard atmospheric pressure) is stored in the airtight first gas storage device a, to form a pressure difference between the first gas storage device a and each of the second gas storage device b, the third gas storage device c and an external environment, and the kinetic energy generated by the pressure difference is used to push the high-pressure piston 2 to operate.

In a second step, when the high-pressure piston 2 is pushed to the limit position (that is a position the high-pressure piston 2 abutting against an inter wall of the first gas storage device a) by the high-pressure gas, the locking and pressing connection cylinder 4 and the piston connecting component 3 are locked together to form an integrated assembly, thus pressures at two ends of the integrated assembly are balanced. At this time, the locking and pressing connection cylinder 4 and the piston connecting component 3 are pushed by the second low-pressure piston 7 toward the high-pressure piston 2 via the second driving rod, to allow the piston connecting component 3 to abut against the high-pressure piston 2.

In a third step, after the piston connecting component 3 abuts against the high-pressure piston 2, the pressures at two ends of the assembly of the piston connecting component 3 and the high-pressure piston 2 are one standard atmospheric pressure, and the second gas storage device b pushes the first low-pressure piston 6 to reset the piston connecting component 3 and the high-pressure piston 2 when the pressures of respective parts of the piston connecting component 3 and the high-pressure piston 2 are equal.

In a fourth step, when the piston connecting component 3 and the high-pressure piston 2 are reset, an elastic switch mounted on the piston connecting component 3 pop opens the inlet valve 11, the high-pressure gas in the first gas storage device a enters the piston cylinder sleeve 1 via the inlet valve 11 to separate the piston connecting component 3 from the high-pressure piston 2, and the high-pressure piston 2 is pushed by the high-pressure gas to perform a next operation. The above process is repeated again and again to allow the pneumatic motor to continuously output energy.

In view of this, the operating principle of the pneumatic motor can be summarized in four aspects. A first aspect is using the pressure difference to push the high-pressure piston, a second aspect is using the locking and pressing connection cylinder to connect the piston connecting component to move the piston connecting component, a third aspect is resetting the piston connecting component and the high-pressure piston when the pressures at two ends of the assembly of the piston connecting component 3 and the high-pressure piston 2 are equal, and a fourth aspect is using the elastic force to separate the piston connecting component from the high-pressure piston.

The following matters should be noted.
1. Air can be compressed to be stored.
2. The greater the density of the compressed air is, the greater an expansion force of the compressed air is.
3. If a volume of a container for storing the compressed air does not change, the expansion force also does not change.
4. Air has a function of storing energy.
5. The compressed air can be recycled. The structure of the pneumatic motor is designed based on the above five properties of air, and the gas storage device of the pneumatic motor is a well sealed container with constant volume, thus the stored air will not be lost.

Besides, high-pressure gas is stored in the fourth gas storage device d, and when the pressure of the first gas storage device a is lower than eight times standard atmospheric pressure, the detection component of the intelligent control system can determine a pressure supplement opportunity and timely control a pressure supplement valve of the fourth gas storage device d to supplement pressure. As long as the mass of the compressed air is constant, the expansion force doesn't change, which embodies that the air has the above-described five properties, including the function of storing energy, that is, the air is not only the medium of energy and the material to generate energy, the pneumatic motor is a power plant to convert the air pressure into mechanical energy, and only the air and the pneumatic motor cooperate with each other, the effects of the compressed air and the functions of the pneumatic motor can be realized. Although the movement of the piston is realized by expansion of the compressed air, the volume of the piston cylinder sleeve 1 is only several tenths of the volume of the high-pressure gas storage device, thus the expanding process of the piston cylinder sleeve 1 hardly affects the overall potential energy of the compressed air. Since gas in the piston cylinder sleeve is already pushed into the high-pressure gas storage device before the high-pressure piston resets, that is, the total mass of the compressed air in the high-pressure gas storage device during the reciprocating motion of the piston doesn't change, and therefore the pneumatic motor can continuously work. This doesn't go against the law of conservation of energy but just proves the law of conservation of energy.

Since the pneumatic motor works under the action of the pressure difference, the pneumatic motor can continuously operate as long as the pressure difference exists. The system of the pneumatic motor has two pressure differences acting upon each other. The first pressure difference is the pressure difference between the mechanical structure and the external environment, the pressure of the compressed air in the high-pressure storage device is eight times standard atmospheric pressure, the pressure of gas in the low-pressure gas storage device is two times standard atmospheric pressure, and the pressure of air in the external environment is one standard atmospheric pressure, thus in this way, the pressure difference between the mechanical structure and the external environment is formed. The second pressure difference is a function pressure difference between the components of this device, for example, an area of the high-pressure piston 2 is 50 square centimeters, the pressure in the high-pressure gas storage device is eight times standard atmospheric pressure, thus a driving force of the high-pressure piston is 50×8=400 kilogram force. The pressure of each of the second gas storage device b and the third gas storage device c is two times standard atmospheric pressure, the area of each of the first low-pressure piston 6 and the second low-pressure piston 7 is 28 square centimeters, thus the driving force generated by the first low-pressure piston 6 and the second low-pressure piston 7 are 28×2+28×2=112 kilogram force. When the high-pressure piston 2 pushes the first low-pressure piston 6 and the second low-pressure piston 7, the driving force of 400 kilogram force is against the driving force of 112 kilogram force, and a difference between the driving forces is 288 kilogram force. When the high-pressure piston 2 completely abuts against the piston connecting component 3, and the high-pressure piston 2 and the piston connecting component 3 form a whole, the two ends of the whole formed by the high-pressure piston 2 and the piston connecting component 3 are both in contact with the external environment, the dimensions of two end surfaces of the whole formed by the high-pressure piston 2 and the piston connecting component 3 are equal, and the pressure of the external environment is one standard atmospheric pressure, therefore pressures at the two ends of the whole formed by the high-pressure piston 2 and the piston connecting component 3 are equal, and an air resistance in moving the high-pressure piston 2 and the piston connecting component 3 is zero, only a frictional resistance between the piston cylinder sleeve 1 and the whole formed by the high-pressure piston 2 and the piston connecting component 3 exists, and the frictional resistance is approximately 2 kilogram force. When the first low-pressure piston 6 resets the high-pressure piston 2 and the piston connecting component 3, the driving force of 56 kilogram force is against the driving force of 2 kilogram force, and a difference between the driving forces is 54 kilogram force. When the locking and pressing connection cylinder 4 and the piston connecting component 3 are locked together, areas of two end surfaces of the assembly formed by the locking and pressing connection cylinder 4 and the piston connecting component 3 are both 50 square centimeters and pressures at the two end surfaces of the assembly are both eight times standard atmospheric pressure, thus an air resistance for the locking and pressing connection cylinder 4 and the piston connecting component 3 is zero, only a frictional resistance between the piston connecting component 3 and the piston cylinder sleeve 1 exists when the piston connecting component 3 moves, and the frictional resistance is approximately 2 kilogram force. When the second low-pressure piston 7 pushes the locking and pressing connection cylinder 4 and the piston connecting component 3 to move into the piston cylinder sleeve 1, the driving force of 56 kilogram force is against the driving force of 2 kilogram force, and a difference between the driving forces is 54 kilogram force. Therefore, the difference between the driving forces of the pneumatic motor is constant, which allows the reversible driving wheel mounted on the pneumatic motor to continuously operate.

The pneumatic motor provided by the present application is described in detail hereinbefore. The principle and the embodiments of the present application are illustrated herein by specific examples. The above description of examples is only intended to help the understanding of the method and the spirit of the present application. It should be noted that, for the person skilled in the art, a few of improvements and modifications may be made to the present application without departing from the principle of the present application, and these improvements and modifications are also deemed to fall into the scope of the present application defined by the claims.

## Claims

1. A pneumatic motor, comprising:
a pressure supply system,
wherein the pressure supply system comprises a first gas storage device (a), a piston cylinder sleeve (1) is provided inside the gas storage device (a), a high-pressure piston (2) is movably arranged inside the piston cylinder sleeve (1), the high-pressure piston (2) is in airtight contact with an inner wall of the piston cylinder sleeve (1), a first driving rod extending out of the first gas storage device (a) is provided on the high-pressure piston (2), the piston cylinder sleeve (1) is further provided with a piston connecting component (3), the piston connecting component (3) has one end inserted into the piston cylinder sleeve (1) and being movable inside the piston cylinder sleeve (1), an end portion of this end of the piston connecting component (3) is configured to abut against the high-pressure piston (2), the piston connecting component (3) has another end on which a locking and pressing connection cylinder (4) is slidably arranged, and the locking and pressing connection cylinder (4) is hermetically connected to the piston connecting component (3) and is in communication with atmosphere, and a second driving rod extending out of the first gas storage device (a) is provided on the locking and pressing connection cylinder (4);
a power output system,
wherein the power output system comprises a reversible driving wheel (5) and a driving rack configured to mesh with the reversible driving wheel (5), the driving rack is arranged on the first driving rod, and a transmission shaft is arranged on the first gas storage device (a) and is rotatable unidirectionally;
a reset system,
wherein the reset system comprises a second gas storage device (b) and a third gas storage device (c), the second gas storage device (b) is provided with a first low-pressure sleeve, a first low-pressure piston (6) is provided inside the first low-pressure sleeve, and the first low-pressure piston (6) is connected to the first driving rod, a second low-pressure piston (7) is provided inside a second low-pressure sleeve, and the second low-pressure piston (7) is connected to the second driving rod; and
a control system,
wherein the control system comprises an intelligent control single chip computer; a lever (8) hinged to the first gas storage device (a), which has one end connected to the first driving rod, and another end hinged to a regulating rod (9), the regulating rod (9) being provided with a push rod configured to abut against the locking and pressing connection cylinder (4) and push the locking and pressing connection cylinder (4) to move towards the third gas storage device (c); a locking mechanism (10), which is arranged on the locking and pressing connection cylinder (4) and configured to lock the piston connecting component (3) to fix the piston connecting component (3) with respect to the locking device (10); and an inlet valve (11) and an outlet valve (12), which are both arranged on the piston cylinder sleeve (1), and are configured to be controlled by the intelligent control single chip computer to be opened or closed.

2. The pneumatic motor according to claim 1, wherein the driving rack and the first driving rod are formed integrally.

3. The pneumatic motor according to claim 1, comprising an air supplement system, wherein the air supplement system comprises a fourth gas storage device (d), and the fourth gas storage device (d) is in communication with the first gas storage device (a).

4. The pneumatic motor according to claim 1, further comprising a detection component configured to detect a pressure inside the first gas storage device (a) and connected to the first gas storage device (a).
